# EUROPEAN PATENT SPECIFICATION

(11) **EP 3 524 783 B1**
(45) Date of publication and mention of the grant of the patent: **07.04.2021**
(21) Application number: 19156718.9
(22) Date of filing: 12.02.2019
(51) Int. Cl.: F04D 29/64, F01D 25/18, F16F 9/36, F04D 29/10

(54) **AIRCRAFT ENGINE SEAL CARRIER INCLUDING ANTI-ROTATION FEATURE**
DICHTUNGSTRÄGER FÜR FLUGZEUGTRIEBWERKE MIT VERDREHSICHERUNG
SUPPORT D'ÉTANCHÉITÉ DE MOTEUR D'AÉRONEF COMPRENANT UNE FONCTION ANTI-ROTATION

(30) Priority: 12.02.2018 US 201815893833
(43) Date of publication of application: 14.08.2019
(73) Proprietor: Raytheon Technologies Corporation, Farmington, CT 06032 (US)
(72) Inventor: AMADOR, Armando, Wethersfield, CT Connecticut 06109 (US); BARGER, David, East Hartford, CT Connecticut 06118 (US); McGEE, Sean P., Vernon, CT Connecticut 06066 (US)
(74) Representative: Dehns

(56) References cited:
- EP-A1- 3 252 355
- EP-A1- 3 263 842
- EP-A1- 3 346 097
- WO-A1-2014/107161
- WO-A1-2014/150187
- WO-A1-2015/061132

## Description

### TECHNICAL FIELD

The present disclosure relates generally to aircraft engine seals, and more particularly to an anti-rotation feature for preventing rotation of an aircraft engine seal components in the case of a seal failure.

### BACKGROUND

Gas turbine engines, such as those utilized in commercial and military aircraft, include a compressor section that compresses air, a combustor section in which the compressed air is mixed with a fuel and ignited, and a turbine section across which the resultant combustion products are expanded. The expansion of the combustion products drives the turbine section to rotate. As the turbine section is connected to the compressor section via a shaft, the rotation of the turbine section further drives the compressor section to rotate. In some examples, a fan is also connected to the shaft and is driven to rotate via rotation of the turbine as well.

Included within the gas turbine engine at multiple locations, such as at bearing supports, are multiple engine seals. Some such seals are carbon seals and include a stationary component in contact with an adjacent rotating component. In certain failure modes, portions of the seal housing that maintain the seal in a stationary state can become disconnected resulting in a system where rotation of the adjacent component can be translated to the seal element, resulting in the seal element being driven to rotate. While certain sealing configurations are resistant to this undesirable rotation, failure modes in which the rotation can occur remain possible.

A prior art seal configuration having the features of the preamble of claim 1 is disclosed in WO 2014/150187 A1.

### SUMMARY OF THE INVENTION

In one aspect of the present invention a seal configuration for an aircraft engine is provided as set forth in claim 1.

In another example of the above described seal configuration, the at least one interface feature comprises a tab protruding radially outwardly from the carrier.

In another example of any of the above described seal configurations for an aircraft engine the spring loaded post is received against the carrier at at least a second position, and wherein the second position is between the pair of notches.

Another example of any of the above described seal configurations for an aircraft engine further includes a second pair of notches radially intruding into the carrier, the second pair of notches being disposed between the first pair of notches.

In another example of any of the above described seal configurations for an aircraft engine the housing is a single piece housing.

In another example of any of the above described seal configurations for an aircraft engine the housing is a two piece housing.

In another aspect of the present invention a gas turbine engine is provided as set forth in claim 6.

In another example of any of the above described gas turbine engines at least one of the seals in the plurality of seals is disposed proximate a bearing.

In a further aspect of the present invention, a method for preventing rotation of a seal element is provided as set forth in claim 8.

In an example of the above described method for preventing rotation of a seal element interfacing the finger and the tab comprises using the tab to oppose circumferential rotation of the tab.

These and other features of the present invention can be best understood from the following specification and drawings, the following of which is a brief description.

### BRIEF DESCRIPTION OF THE DRAWINGS

Figure 1 illustrates a high level schematic view of an exemplary gas turbine engine
Figure 2 schematically illustrates an axial end view of an exemplary seal configuration, outside the wording of the claims.
Figure 3 schematically illustrates a cross sectional view along cross section A-A of the exemplary seal configuration of Figure 2.
Figure 4 illustrates a highly schematic seal carrier configuration incorporating multiple variations of an anti-rotation feature, outside the wording of the claims.
Figure 5 schematically illustrates an alternate anti-rotation feature, outside the wording of the claims.
Figure 6 illustrates an embodiment of a spring driven anti-rotation feature for a seal configuration.
Figure 7 illustrates a more detailed embodiment of a spring driven anti-rotation feature for a seal configuration, including vibrational damping features.

### DETAILED DESCRIPTION OF AN EMBODIMENT

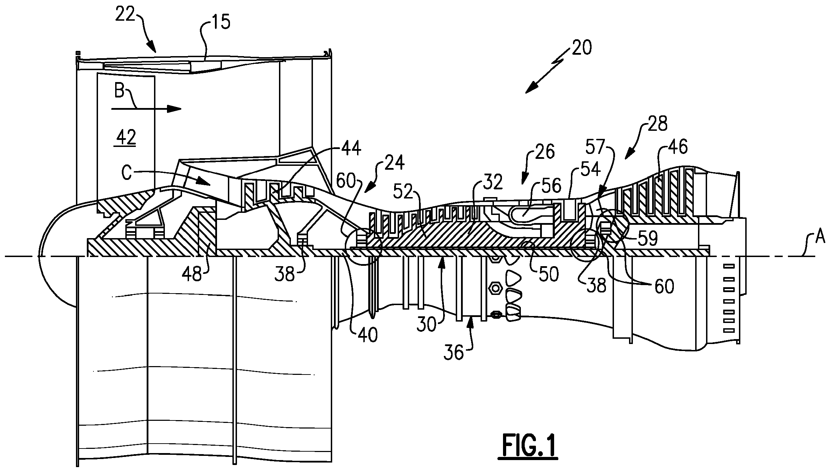

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine engine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^^{0.5} (where °R = K x 9/5). The "Low corrected fan tip speed" as disclosed herein according to one non-limiting embodiment is less than about 1150 ft / second (350.5 meters/second).

Included within the engine 20 are multiple seal locations 60 at or near the engine bearings. Each of the seal locations 60 includes a stationary carbon seal disposed against an adjacent rotating engine part. While illustrated at three locations in the exemplary engine 20 of Figure 1, one of skill in the art will appreciate that the number, and location, of the carbon seals will vary depending on the specific configuration of the given engine.

Some carbon seal designs utilize a bellows spring configuration to apply an axial load to the carbon seal face, thereby maintaining a sealing element in a stationary position relative to the rotating component contacting the sealing element. Due to vibrations induced by engine operations, or other external occurrences, the bellows spring can be excited and fail. When such a failure occurs, it is possible for the failure to occur at the weld points, resulting in a portion of the bellows spring becoming decoupled from the seal housing. The decoupling allows the decoupled portion of the bellows spring and the corresponding seal element to rotate along with the adjacent component. Such a rotation is undesirable and can result in a loss of centering of the seal element, damage to the seal element, the seal carrier, and further damage to the bellows spring, debris entering the sealed compartment and placing other hardware at risk, as well as potentially allowing oil to pass through the seal and contaminating an adjacent area.

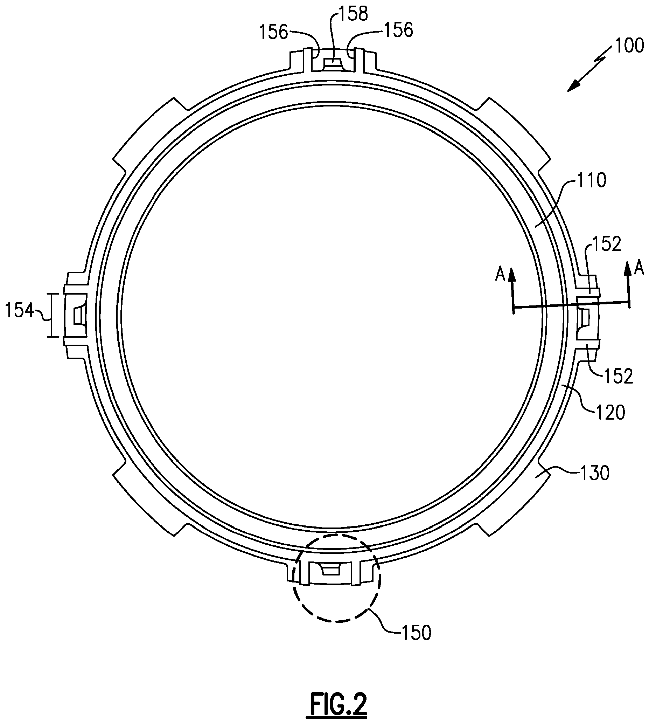

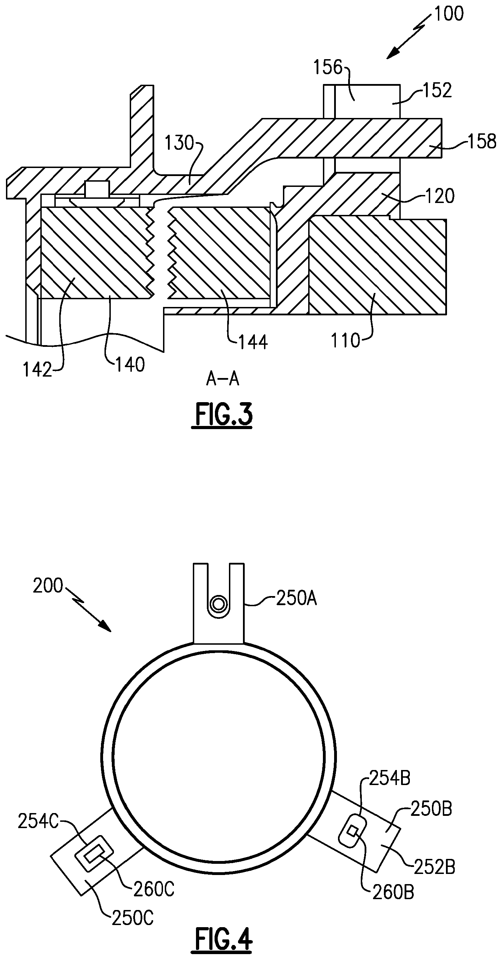

With continued reference to Figure 1, Figure 2 schematically illustrates an axial end view of an exemplary seal configuration 100, outside the wording of the claims. Figure 3 schematically illustrates a cross sectional view along cross section A-A of the exemplary seal configuration 100 of Figure 2. The seal configuration 100 includes a ring shaped seal element 110. The ring shaped seal element 110 can, in some examples, be a carbon seal. The ring shaped seal element 110 is mounted within a carrier 120. A housing 130 is disposed radially outward to the carrier 120, and is maintained in position relative to an engine static structure via any known static housing connection. The housing 130 is coupled to the carrier 120 via a bellows spring 140 (hidden in Figure 2).

In situations where the bellows spring 140 encounters a failure mode, a first portion 142 of the bellows spring 140 can be decoupled from a second portion 144 of the bellows spring 140, allowing the second portion 144, and thus the carrier 120 and the seal element 110, to rotate about an axis defined by the engine. The illustrated bellows spring 140 of Figure 3 is depicted in such a failure mode. Further, while the illustrated failure mode includes a second portion 144 decoupled from a first portion 142, the features further described herein can be applicable to any failure mode that would allow the carrier 120 and the seal element 110 to rotate about the axis.

In order to prevent the undesirable rotation, and thus minimize the negative impact of a failure mode, the seal configuration 100 includes multiple anti-rotation features 150 disposed about the circumference of the sealing configuration 100. In the illustrated example of Figures 2 and 3, the anti-rotation features 150 are disposed evenly about the circumference, and there are four such features 150. In alternative examples, any number of anti-rotation features 150 greater than one can be utilized, and the anti-rotation features 150 can be evenly distributed about the circumference, or in any other rotationally balanced distribution.

In the example of Figures 2 and 3, the anti-rotation features 150 take the form of a pair of tabs 152 radially extending from an outer edge of the carrier 120. The radially extending tabs 152 define a gap 154 with each tab 152 including a face 156 facing the gap 154. Extending axially into the gap 154 is a finger 158. The finger 158 is a component of the housing 130. While in a non-failure mode (e.g. the bellows spring 140 is fully functional), the finger 158 does not contact the carrier 120, or the tabs 152. In some examples, the facing surfaces 156 of the tabs 152 are parallel surfaces. In alternative examples, the facing surfaces 156 can be tapered (angled relative to each other), such that a surface of the finger 158 makes full contact with one of the tabs 152 during the failure mode. In one alternative example, a single tab 152 can project radially outward from the carrier 120, and be received in a gap defined between two fingers 158.

During operation, when a bellows spring 140 failure mode is encountered, and rotation of the seal element 110 and carrier 120 occurs, the tabs 152 rotate into contact with the finger 158. As the finger 158 is statically mounted to the housing 130, the finger 158 prevents further rotation of the carrier 120 and the seal element 110. In some examples, the engine 20 incorporating the seal configuration 100 can be designed such that rotation of the seal element 110 will only occur in a single rotational direction. In such examples, rotation of the carrier 120 and the seal element 110 will only cause the finger 158 to contact the tab 152 positioned in the corresponding direction of rotation. Under this configuration, the second tab 152 can be omitted entirely, and the anti-rotation feature can still be achieved.

While illustrated in Figures 2 and 3 as a single integral component, it is understood that the housing 130 can be two or more distinct components connected together in a static arrangement. By way of example, a two-piece housing 130 could include a first housing structure and a second anti-rotation structure statically supported by, and connected to, the first housing structure.

With continued reference to Figures 1-3, Figure 4 illustrates a highly schematic seal carrier configuration 200 incorporating multiple variations of an anti-rotation feature 250 in a single seal, outside the wording of the claims. As can be seen in Figure 4, the multiple variations 250A, 250B, 250C can be incorporated in a single seal configuration simultaneously. Alternatively, any combination of one or more of the anti-rotation features 250A, 250B, 250C, or any of the other alternative anti-rotation features described herein can be utilized in a single seal configuration.

The top anti-rotation feature 250A is a schematic representation of the anti-rotation feature 150 of Figures 2 and 3. The bottom right anti-rotation feature 250B replaces the independent tabs, and the defined gap, with a singular post 252B having a shaped hole 254B. The finger 260B is received in the hole 254B without contacting any of the inward facing surfaces of the hole 254B. The hole 254B can be circular in some examples, or oval as in the illustrated example. The bottom left example anti-rotation feature 250C is similar to the bottom right anti-rotation feature 250B, however the shaped hole 254C and the finger 260C are rectangular instead of rounded.

With continued reference to Figures 1-4, Figure 5 schematically illustrates an alternate seal configuration 300, outside the wording of the claims. As with the previous examples, the alternate seal configuration 300 includes a seal element 310, a carrier 320, and a housing 330. However, unlike the previous examples, each anti-rotation feature 350 is a pair of ramps 322, 332. Each of the ramps 322, 332 in a given pair has a ramp angle opposed to the ramp angle of the other ramp 322, 332 in the pair. As used herein, the ramp angle refers to the clockwise or counterclockwise direction of the ramping surface. The ramp 322 disposed on the carrier 320 extends radially outward from the carrier 320. Similarly the ramp 332 disposed on the housing 330 extends radially inward from the housing 330. At their peaks, the opposed ramps 322, 332 would intersect if located at the same circumferential position.

When a bellows spring fault allows the seal element 310 and the seal carrier 320 to rotate, the opposed ramps 322, 332 are rotated into contact with each other, and the intersection at the peaks of the ramps 322, 332 prevents the ramps 322, 332 from rotating further. The ramp 332 protruding radially inward from the housing 330 can alternatively be referred to as a finger, while the ramp 322 protruding radially outward from the carrier 320 can alternatively be referred to as a tab.

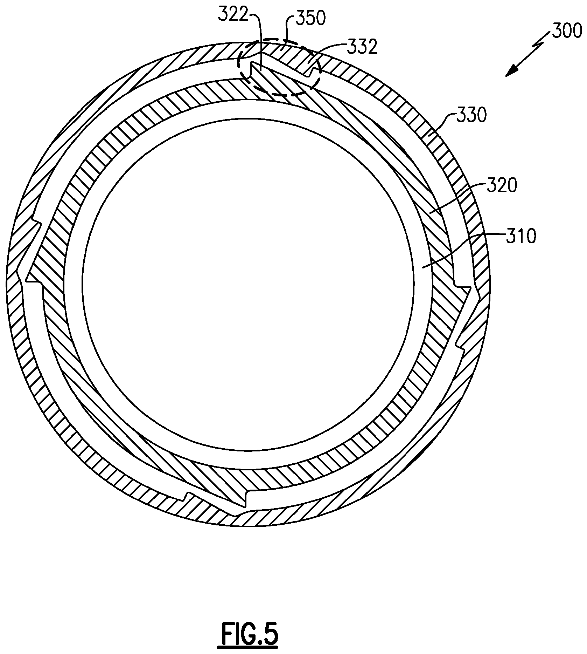

The exemplary anti-rotation features 350 of Figure 5 are configured in a single orientation in order to prevent rotation in a single direction. It is appreciated that the orientation can be inverted on some, or all, of the anti-rotation features 350 in order to prevent rotation in the other direction. In instances where only a portion of the anti-rotation features 350 are inverted, rotation is prevented in both directions.

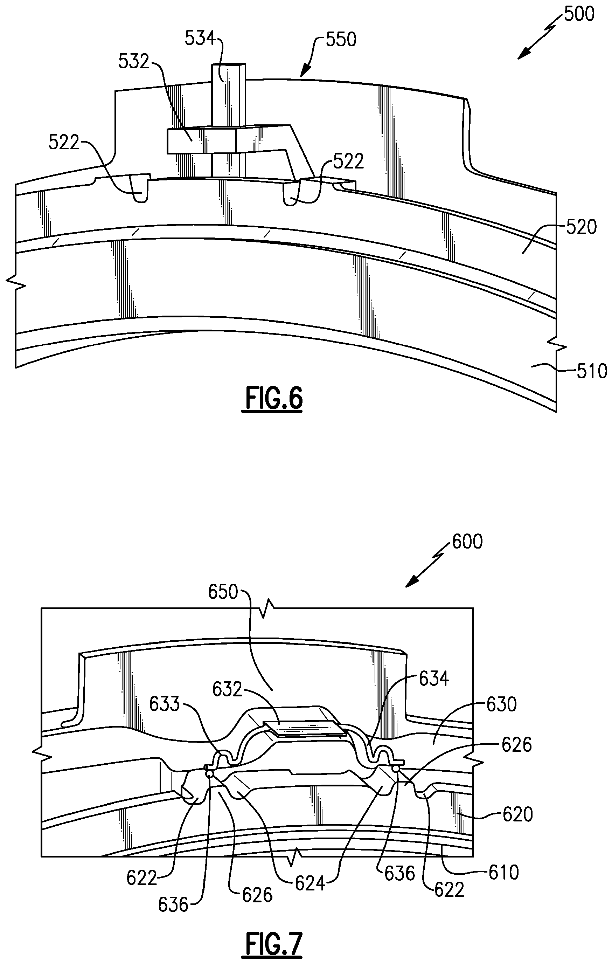

With continued reference to Figures 1-5, Figure 6 illustrates an embodiment of a spring driven anti-rotation feature 550 for a seal configuration 500. In the embodiment of Figure 6, a carrier 520 includes a pair of notches 522 disposed on each circumferential side of a finger 532. The notches 522 are radial intrusions into the carrier 520, and are sized to fully receive a spring loaded post 534 retained by the finger 532. The post 534 is spring-loaded to exert a force on the carrier 520. When the carrier 520 shifts, due to rotation of the carrier 520 and the seal element 510, the radially inward end of the post 534 shifts along the surface of the carrier 520 until the post 534 is aligned with one of the notches 522. Once aligned, the spring loading forces the post 534 into the notch and prevents further rotation of the carrier 520 in either direction.

With continued reference to Figure 6, Figure 7 schematically illustrates a more complex implementation of the spring loaded anti rotation feature 650 for a seal configuration 600. As with the embodiment of Figure 6, the anti-rotation feature 650 includes a finger 632 extending from the housing 630. Attached to the finger 632 is a spring loaded extension 634. The spring loaded extension includes two spring arms 633 that are bent to absorb vibrations and utilize a spring force to push a corresponding post 636 against the carrier 620. On each circumferential side of each post 636, a notch 622, 624 radially intrudes into the carrier 620. In the illustrated embodiment, the posts 636 rest against a radially protruding tab 626. When the carrier 620 rotates in either direction, the post 636 is pressed into a corresponding notch 622, 624 and further rotation of the carrier 620 in either direction is prevented.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention.

## Claims

1. A seal configuration (500) for an aircraft engine (20) comprising:
a ring shaped sealing component (510; 610) defining an axis;
a carrier (520; 620) disposed radially outward of the ring shaped sealing component (510; 610) and supporting the ring shaped sealing component (510; 610); and
a housing (630) disposed at least partially about the carrier (520; 620), and maintained in a static position relative to the carrier (520; 620) via a spring (140), wherein the carrier (520; 620) and the housing (630) include a plurality of rotation inhibiting features (550; 650) disposed in a balanced configuration about the carrier (520; 620) and the housing (630), and each of the rotation inhibiting features (550; 650) includes a finger (532; 632) extending from said housing (630) and at least one interface feature (522; 622, 626) corresponding to each finger (532; 632), and being disposed on the carrier (520; 620), wherein each finger (532; 632) is axially aligned, **characterized in that**:
the spring (140) is a bellows spring (140), each finger (532; 632) includes at least one spring loaded extension (534; 634) received against the carrier (520; 620), the at least one interface feature comprises a pair of notches (522; 622, 624) protruding radially into the carrier (520; 620), and said spring loaded extension (534; 634) is received against the carrier (520; 620) at least at a first circumferential position, the first circumferential position being between the pair of notches (522; 622, 624).

2. The seal configuration of claim 1, wherein the at least one interface feature comprises a tab (626) protruding radially outward from the carrier (620).

3. The seal configuration of claim 1 or 2, wherein the spring loaded extension (534; 634) is receivable against the carrier (520; 620) at least at a second circumferential position, the second circumferential position being between the pair of notches (522; 622, 624).

4. The seal configuration of claim 1, 2 or 3, further comprising a second pair of notches (622, 624) radially intruding into the carrier (620), the second pair of notches (622, 624) being disposed between the first pair of notches (622, 624).

5. The seal configuration of any preceding claim, wherein the housing (630) is a single piece housing (630) or a two piece housing (630).

6. A gas turbine engine (20) comprising:
a compressor section (24), a combustor section (26) fluidly connected to the compressor section (24), and a turbine section (28) fluidly connected to the combustor section (26); and
a plurality of seals disposed within the gas turbine engine (20), each of the seals including the seal configuration (100) of any preceding claim.

7. The gas turbine engine (20) of claim 6, wherein at least one of the seals in the plurality of seals is disposed proximate a bearing (38).

8. A method for preventing rotation of a seal element (510; 610) comprising:
allowing at least a portion of the seal element (510; 610) to rotate until a finger (532; 632) extending from a housing (630) is interfaced with a tab (626) extending from a seal carrier (520; 620),
**characterized in that**:
the finger (532; 632) comprises at least one spring loaded extension (534; 634) received against the carrier (520; 620) at least at a first circumferential position, the first circumferential position being between a pair of intrusions (522; 622, 624) into the seal carrier (520; 620); and **in that**
the method further comprises preventing continued rotation of the seal element (510; 610) via the interface between the finger (532; 632) and the tab (626) by receiving the finger (532; 632) in one of the pair of intrusions (522; 622, 624).

9. The method of claim 8, wherein interfacing the finger (532; 632) and the tab (626) comprises using the tab (626) to oppose circumferential rotation of the tab.

## Patentansprüche

1. Dichtungskonfiguration (500) für ein Luftfahrzeugtriebwerk (20), umfassend:
eine ringförmige Dichtungskomponente (510; 610), die eine Achse definiert;
einen Träger (520; 620), der radial auswärts von der ringförmigen Dichtungskomponente (510; 610) angeordnet ist und die ringförmige Dichtungskomponente (510; 610) stützt; und
ein Gehäuse (630), das mindestens teilweise um den Träger (520; 620) herum angeordnet ist und über eine Feder (140) in einer statischen Position relativ zu dem Träger (520; 620) gehalten wird, wobei der Träger (520; 620) und das Gehäuse (630) eine Vielzahl von rotationshemmenden Merkmalen (550; 650) beinhalten, die in einer ausgeglichenen Konfiguration um den Träger (520; 620) und das Gehäuse (630) herum angeordnet ist, und jedes der rotationshemmenden Merkmale (550; 650) einen Finger (532; 632) beinhaltet, der sich von dem Gehäuse (630) und mindestens einem Schnittstellenmerkmal (522; 622, 626) entsprechend jedem Finger (532; 632) erstreckt und an dem Träger (520; 620) angeordnet ist, wobei jeder Finger (532; 632) axial ausgerichtet ist, **dadurch gekennzeichnet, dass**:
die Feder (140) eine Balgfeder (140) ist, wobei jeder Finger (532; 632) mindestens eine federbelastete Verlängerung (534; 634) beinhaltet, die gegen den Träger (520; 620) empfangen ist, wobei das mindestens eine Schnittstellenmerkmal ein Paar Einkerbungen (522; 622, 624) umfasst, die radial in den Träger (520; 620) hineinragen, und die federbelastete Verlängerung (534; 634) an mindestens einer ersten Umfangsposition gegen den Träger (520; 620) empfangen ist, wobei die erste Umfangsposition zwischen dem Paar Einkerbungen (522; 622, 624) liegt.

2. Dichtungskonfiguration nach Anspruch 1, wobei das mindestens eine Schnittstellenmerkmal eine Lasche (626) umfasst, die radial auswärts von dem Träger (620) hervorragt.

3. Dichtungskonfiguration nach Anspruch 1 oder 2, wobei die federbelastete Verlängerung (534; 634) an mindestens einer zweiten Umfangsposition gegen den Träger (520; 620) empfangbar ist, wobei die zweite Umfangsposition zwischen dem Paar Einkerbungen (522; 622, 624) liegt.

4. Dichtungskonfiguration nach Anspruch 1, 2 oder 3, ferner umfassend ein zweites Paar Einkerbungen (622, 624), das radial in den Träger (620) eindringt, wobei das zweite Paar Einkerbungen (622, 624) zwischen dem ersten Paar Einkerbungen (622, 624) angeordnet ist.

5. Dichtungskonfiguration nach einem der vorhergehenden Ansprüche, wobei das Gehäuse (630) ein einteiliges Gehäuse (630) oder ein zweiteiliges Gehäuse (630) ist.

6. Gasturbinentriebwerk (20), umfassend:
einen Verdichterabschnitt (24), einen Brennkammerabschnitt (26), der fluidisch mit dem Verdichterabschnitt (24) verbunden ist, und einen Turbinenabschnitt (28), der fluidisch mit dem Brennkammerabschnitt (26) verbunden ist; und
eine Vielzahl von Dichtungen, die innerhalb des Gasturbinentriebwerks (20) angeordnet ist, wobei jede der Dichtungen die Dichtungskonfiguration (100) nach einem der vorhergehenden Ansprüche beinhaltet.

7. Gasturbinentriebwerk (20) nach Anspruch 6, wobei mindestens eine der Dichtungen in der Vielzahl von Dichtungen in der Nähe eines Lagers (38) angeordnet ist.

8. Verfahren zur Rotationshemmung eines Dichtungselements (510; 610), umfassend:
Ermöglichen der Rotation mindestens eines Teils des Dichtungselements (510; 610), bis ein Finger (532; 632), der sich von einem Gehäuse (630) erstreckt, eine Schnittstelle mit einer Lasche (626), die sich von einem Dichtungsträger (520; 620) erstreckt, ausgebildet hat,
**dadurch gekennzeichnet, dass**:
der Finger (532; 632) mindestens eine federbelastete Verlängerung (534; 634) umfasst, die an mindestens einer Umfangsposition gegen den Träger (520; 620) empfangen ist, wobei die erste Umfangsposition zwischen einem Paar Intrusionen (522; 622, 624) in den Dichtungsträger (520; 620) liegt; und dadurch, dass
das Verfahren ferner ein Hemmen von andauernder Rotation des Dichtungselements (510; 610) über die Schnittstelle zwischen dem Finger (532; 632) und der Lasche (626) durch Empfangen des Fingers (532; 632) in einer des Paares Intrusionen (522; 622, 624) umfasst.

9. Verfahren nach Anspruch 8, wobei das Ausbilden der Schnittstelle zwischen dem Finger (532; 632) und der Lasche (626) die Verwendung der Lasche (626) umfasst, um der Umfangsrotation der Lasche entgegenzuwirken.

## Revendications

1. Configuration d'étanchéité (500) pour un moteur d'aéronef (20) comprenant :
un composant d'étanchéité en forme d'anneau (510 ; 610) définissant un axe ;
un support (520 ; 620) disposé de manière radiale vers l'extérieur du composant d'étanchéité en forme d'anneau (510 ; 610) et supportant le composant d'étanchéité en forme d'anneau (510 ; 610) ; et
un boîtier (630) disposé au moins de manière partielle autour du support (520 ; 620), et maintenu dans une position statique par rapport au support (520 ; 620) par l'intermédiaire d'un ressort (140), dans laquelle le support (520 ; 620) et le boîtier (630) comprennent une pluralité de fonctions d'inhibition de rotation (550 ; 650) disposés dans une configuration équilibrée autour du support (520 ; 620) et du boîtier (630), et chacune des fonctions d'inhibition de rotation (550 ; 650) comprend un doigt (532 ; 632) s'étendant depuis ledit boîtier (630) et au moins une fonction d'interface (522 ; 622, 626) correspondant à chaque doigt (532 ; 632), et étant disposé sur le support (520 ; 620), dans laquelle chaque doigt (532 ; 632) est aligné de manière axiale, **caractérisée en ce que** :
le ressort (140) est un ressort à soufflet (140), chaque doigt (532 ; 632) comprend au moins une extension à ressort (534 ; 634) reçue contre le support (520 ; 620), l'au moins une fonction d'interface comprend une paire d'encoches (522 ; 622, 624) faisant saillie de manière radiale dans le support (520 ; 620), et ladite extension à ressort (534 ; 634) est reçue contre le support (520 ; 620) au moins au niveau d'une première position circonférentielle, la première position circonférentielle étant entre la paire d'encoches (522 ; 622, 624).

2. Configuration d'étanchéité selon la revendication 1, dans laquelle l'au moins une fonction d'interface comprend une languette (626) faisant saillie de manière radiale vers l'extérieur depuis le support (620).

3. Configuration d'étanchéité selon la revendication 1 ou 2, dans laquelle l'extension à ressort (534 ; 634) peut être reçue contre le support (520 ; 620) au moins au niveau d'une seconde position circonférentielle, la seconde position circonférentielle étant entre la paire d'encoches (522 ; 622, 624) .

4. Configuration d'étanchéité selon la revendication 1, 2 ou 3, comprenant en outre une seconde paire d'encoches (622, 624) pénétrant de manière radiale dans le support (620), la seconde paire d'encoches (622, 624) étant disposée entre la première paire d'encoches (622, 624).

5. Configuration d'étanchéité selon une quelconque revendication précédente, dans laquelle le boîtier (630) est un boîtier en une seule pièce (630) ou un boîtier en deux pièces (630) .

6. Moteur à turbine à gaz (20) comprenant :
une section de compresseur (24), une section de chambre de combustion (26) reliée de manière fluidique à la section de compresseur (24), et une section de turbine (28) reliée de manière fluidique à la section de chambre de combustion (26) ;
et
une pluralité de joints d'étanchéité étant disposés à l'intérieur du moteur à turbine à gaz (20), chacun des joints d'étanchéité comprenant la configuration d'étanchéité (100) selon une quelconque revendication précédente.

7. Moteur à turbine à gaz (20) selon la revendication 6, dans lequel au moins l'un parmi les joints d'étanchéité dans la pluralité de joints d'étanchéité est disposé à proximité d'un palier (38).

8. Procédé pour empêcher la rotation d'un élément d'étanchéité (510 ; 610) comprenant :
le fait de permettre à au moins une partie de l'élément d'étanchéité (510 ; 610) de tourner jusqu'à ce qu'un doigt (532 ; 632) s'étendant depuis un boîtier (630) soit en interface avec une languette (626) s'étendant depuis un support d'étanchéité (520 ; 620),
**caractérisé en ce que** :
le doigt (532 ; 632) comprend au moins une extension à ressort (534 ; 634) reçue contre le support (520 ; 620) au moins au niveau d'une première position circonférentielle, la première position circonférentielle étant entre une paire d'intrusions (522 ; 622, 624) dans le support d'étanchéité (520 ; 620) ; et **en ce que**
le procédé comprend en outre le fait d'empêcher la rotation continue de l'élément d'étanchéité (510 ; 610) par l'intermédiaire de l'interface entre le doigt (532 ; 632) et la languette (626) en recevant le doigt (532 ; 632) dans l'une parmi la paire d'intrusions (522 ; 622, 624).

9. Procédé selon la revendication 8, dans lequel l'interfaçage du doigt (532 ; 632) et de la languette (626) comprend l'utilisation de la languette (626) pour s'opposer à la rotation circonférentielle de la languette.
